# EUROPEAN PATENT SPECIFICATION

(11) **EP 3 609 205 B1**
(45) Date of publication and mention of the grant of the patent: **15.12.2021**
(21) Application number: 18188553.4
(22) Date of filing: 10.08.2018
(51) Int. Cl.: H04W 4/38, H04W 4/70, H04L 29/08, H04W 84/18, H04W 84/12, H04W 88/08

(54) **WIRELESS DATA COMMUNICATION IN A SYSTEM**
DRAHTLOSDATENKOMMUNIKATION IN EINEM SYSTEM
COMMUNICATION DE DONNÉES SANS FIL DANS UN SYSTÈME

(43) Date of publication of application: 12.02.2020
(73) Proprietor: Otis Elevator Company, Farmington, Connecticut 06032 (US)
(72) Inventor: Pahlke, Derk Oscar, 13507 Berlin (DE)
(74) Representative: Schmitt-Nilson Schraud Waibel Wohlfrom Patentanwälte Partnerschaft mbB

(56) References cited:
- WO-A1-2013/151533
- US-A1- 2016 185 568
- US-A1- 2017 088 397

## Description

The invention relates to a wireless data communication in a system, in particular to a communication system and method to be used in a system having a plurality of sensors and/or controllers, particularly in a passenger conveyor system and in a heating, ventilation and air conditioning (HVAC) system.

Passenger conveyor systems such as an elevator system, an escalator system, a cable car system or a ski lift system have been widely used all over the world Those systems must be periodically checked, maintained, and repaired as necessary. In order to do such jobs in an efficient way, a plurality of sensors and/or controllers have been used to collect data representing various statuses of a passenger conveyor system. In these systems, collected data by the sensors and/ or controllers need to be transferred to managers of the systems in an efficient way and on a real time basis.

US 2016/185568 A1 discloses a communication system for an elevator system, comprising at least one sensor unit 4 arranged in an elevator shaft 3, a first communication unit 1 arranged in an elevator car 5, and a second communication unit 2 arranged outside the radio range of the at least one sensor unit 4, and a monitoring unit 13. Sensor data are transmitted from the sensor unit 4 to the first communication unit 1 via a first communication network, and then the sensor data are transmitted from the first communication unit 1 to the second communication unit 2 and are transmitted from the second communication unit 2 to the monitoring unit 13 via a second communication network.

US 2017/088397 A1 discloses a computer system configured to cause a mechanical action based on transient data stored on a user's mobile device. The system includes a mobile device finder for receiving calendar information from a mobile device within a physical distance from an elevator system. The system includes a calendar verifier for determining that the time of the appointment is within a time period from a current time and that the place of the appointment corresponds to a destination floor reachable by the elevator system. The system includes an elevator programmer for programming the elevator system with the destination floor so that, when a user carries the mobile device onto an elevator car of the elevator system, the elevator system controls the elevator car to take the user to the destination floor.

Accordingly, it would be beneficial to provide a reliable communication system and method in a system having a plurality of sensors and/or controllers.

The present invention relates to a communication system and method according to the appended claims.

According to an exemplary embodiment of the invention, a communication system to be used in a system having a plurality of sensors and/or controllers, particularly in a passenger conveyor system and in a heating, ventilation and air conditioning (HVAC) system, comprises a main gateway (GW) connected to a first controller of the system, the main GW connectable to a management center of the system via the Internet or a cloud system, and at least one satellite GW connected to at least one second controller of the system, the at least one satellite GW connected to the main GW via a wireless local area network (WLAN).

With this configuration, each controller or sensor of the system can be connected to a remotely located management center via the Internet or the cloud with reduced installation time and cost.

A number of optional features are set out in the following. These features may be realized in particular embodiments, alone or in combination with any of the other features.

An embodiment of the communication system according to the present invention may further comprise an intermediate satellite GW configured to wirelessly interconnect the main GW and any of the at least one satellite GW. Using the intermediate satellite GW, a coverage of WLAN can be extended without a necessity of increasing a capacity of each satellite GW. A plurality of intermediate satellite GWs may be interconnected serially in between the satellite GW and the main GW.

The main GW and the at least one satellite GW may perform edge computing. In other words, each of the main GW and the satellite GWs may be equipped with a processor which is configured to perform a predefined data processing and thereby, instead of transferring all obtained raw data, each of the main GW and the satellite GW performs the predefined data processing with the raw data. Thus, the processed data is transferred to the main GW. From the edge computing, real-time data processing near the source of data, i.e. a sensor, is possible and thereby the entire volume of data to be delivered through the network can be significantly decreased. This allows to set up a communication network between the main GW and the satellite GWs requesting a low bandwidth.

In particular, the WLAN may be any of a Bluetooth, a Bluetooth Low Energy (BLE) network or a Sub-1GHz wireless network. The BLE is a wireless personal area network technology designed by the Bluetooth Special Interest Group (Bluetooth SIG) and implemented according to the Bluetooth technical standard. Compared to the classic Bluetooth, the BLE is intended to provide considerably reduced power consumption and cost while maintaining a similar communication range. The BLE uses the same 2.4 GHz radio frequencies as the classic Bluetooth. The Sub-1GHz is a special type of wireless network which operates in a frequency band below Sub 1GHz, typically in the 769-935 MHz. The Sub-1GHz needs a lower power signal from a transmitter compared to the 2.4GHz spectrum to get the same output power signal at a receiver and the Sub-1GHz offers a wider range than the 2.4GHz. The wireless technical standards like Sigfox and LoraWan may be applied to establish the WLAN like Sub-1GHz wireless network.

According to an embodiment of the present invention, the at least one second controller may include a sensor which collects data relating to a passenger conveyor system, an elevator hall call panel and/or an elevator car control panel.

In particular, the connection between the main GW and the first controller, and the connection between the satellite GW and the at least one second controller are wired connections using an RS-422 cable, an RS-232 cable, a Modbus cable, a serial discrete cable, a PROFibus cable, or a CAN bus.

In particular, each of the at least one satellite GW may comprise a processor configured to perform a predefined data processing on data received from the second controller, a first interface module configured to perform wired communications with the second controller, and a second interface module configured to perform wireless communications with the main GW. This configuration of the satellite GW may be well suited for a preexisting elevator system which has already been equipped with a plurality of sensors and/or controllers. In particular, a plurality of satellite GWs may be installed in a preexisting elevator system to be connected with the sensors and/or controllers via the CAN bus, the RS-232 cable, the Modbus cable, the serial discrete cable, the PROFibus cable, or the RS-422 cable of the elevator system like a plug and play solution, which can reduce time and cost for the installation of a new network system in the preexisting elevator system. The wireless communication network established by the main GW and the satellite GWs works independent of any existing communication systems in the system like a passenger conveyor system, particularly independent of any safety related communications like a safety chain in electronic safety control systems. Nevertheless, the wireless communication network may transmit safety relevant information provided by a sensor also connected to a safety control system.

According to an exemplary embodiment of the invention, a method of performing communication in a system having a plurality of sensors and/or controllers, particularly in a passenger conveyor system and in a heating, ventilation and air conditioning (HVAC) system, comprises receiving, by a satellite gateway (GW), data from at least one second controller of the system, transferring, by the satellite GW, the data to a main GW connected to a first controller of the system, the satellite GW connected to the main GW via a wireless local area network (WLAN), and transferring, by the main GW, the received data to a management center of the passenger conveyor system via the Internet or a cloud system.

An embodiment of the present invention may further comprise performing, by the satellite GW, a predefined data processing on the received data and then the processed data is transferred by the satellite GW to the main GW.

An embodiment of the present invention may further comprise making a wired connection using an RS-422 cable, an RS-232 cable, a Modbus cable, a serial discrete cable, a PROFibus cable, or a CAN bus between the satellite GW and the at least one second controller which has already been preexisting in the passenger conveyor system. In particular, a plurality of satellite GWs may be connected with preexisting sensors and/or controllers of the preexisting elevator system.

Such method will provide the same characteristics and advantages as outlined with respect to the system above.

According to the embodiments of the present invention described herein, each controller or sensor of the system having a plurality of sensors and/or controllers can be connected to a remotely located management center via the Internet or the cloud with reduced installation time and cost. In addition, according to the embodiments of the present invention, real-time data processing near the source of data is possible and thereby the entire volume of data to be delivered through the network can be significantly decreased. Further, according to the embodiments of the present invention, it becomes possible for a preexisting system to be equipped with a wireless network with reduced installation time and cost. Safety control systems remain unaffected by implementation of such wireless network. In some embodiments, a simple plug and play implementation is possible by merely plugging respective satellite GWs into existing interfaces of the respective second controllers.

In the following an exemplary embodiment of the invention is described with reference to the enclosed figures.
Fig. 1 is a schematic diagram depicting an elevator system comprising an elevator car according to an exemplary embodiment of the invention.
Fig. 2 is a schematic diagram showing a side view of an escalator system.
Fig. 3 is a schematic diagram depicting a communication system implemented in an elevator system according to an exemplary embodiment of the invention.
Fig. 4A is a diagram showing an exemplary structure of a satellite gateway (GW) in accordance with an embodiment of the present invention.
Fig. 4B is a diagram showing an exemplary structure of a main GW in accordance with an embodiment of the present invention.
Fig. 5 is a flowchart showing a data flow according to an exemplary embodiment of the invention.
Fig. 6 is a schematic diagram showing a concept of an intermediate satellite GW according to another exemplary embodiment of the invention.

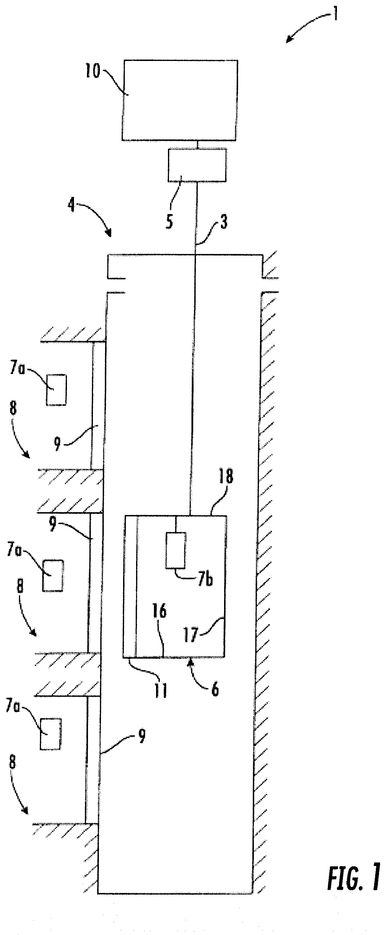

Fig. 1 schematically depicts an elevator system 1 based upon which an exemplary embodiment of the invention can be implemented. The elevator system 1 comprises an elevator car 6.

The elevator system 1 further comprises a hoistway 4 extending in a vertical direction between a plurality of landings 8 located on different floors.

The elevator car 6 comprises a car floor 16, a car ceiling 18 and car sidewalls 17 extending between the car floor 16 and the car ceiling 18 defining an interior space of the elevator car 6. Only one car sidewall 17 is depicted in the schematic illustration of Fig. 1.

Each landing 8 is provided with a landing door (elevator hoistway door) 9, and the elevator car 6 is provided with a corresponding elevator car door 11 allowing passengers to transfer between a landing 8 and the interior space of the elevator car 6 when the elevator car 6 is positioned at the respective landing 8.

The elevator car 6 is movably suspended within the hoistway 4 by means of a tension member 3. The tension member 3, for example a rope or belt, is connected to a drive 5, which is configured for driving the tension member 3 in order to move the elevator car 6 along the longitudinal direction / height of the hoistway 4 between the plurality of landings 8.

The elevator system 1 shown in Fig. 1 uses a 1:1 roping for suspending the elevator car 6. The skilled person, however, easily understands that the type of the roping is not essential for the invention and that different kinds of roping, e.g. a 2:1 roping or a 4:1 roping may be used as well.

The elevator system 1 may further include a counterweight (not shown) attached to the tension member 3 opposite to the elevator car 6 and moving concurrently and in opposite direction with respect to the elevator car 6 along at least one counterweight guide member (not shown). The skilled person will understand that the invention may be applied to elevator systems 1 which do not comprise a counterweight as well.

The tension member 3 may be a rope, e.g. a steel core, or a belt. The tension member 3 may be uncoated or may have a coating, e.g. in the form of a polymer jacket. In a particular embodiment, the tension member 3 may be a belt comprising a plurality of polymer coated steel cords (not shown). The elevator system 1 may have a traction drive including a traction sheave for driving the tension member 3. Instead of a traction drive, a hydraulic or a linear drive may be used for driving the tension member 3. In an alternative configuration, which is not shown in the figures, the elevator system 1 may be an elevator system 1 without a tension member 3, comprising e.g. a hydraulic drive or a linear drive. The elevator system 1 may have a machine room (not shown) or may be a machine room-less elevator system.

The drive 5 is controlled by an elevator controller 10 for moving the elevator car 6 along the hoistway 4 between the different landings 8.

Input to the elevator controlle 10 may be provided via elevator hall call buttons included in hall call panels 7a, which are provided on each landing 8 close to the elevator landing doors 9, and/or via elevator car control buttons provided in a car control panel 7b located inside the elevator car 6. The hall call panels 7a may have the configuration of destination call panels including buttons for input of a desired destination floor by the passenger. In this case, the elevator car control buttons 7b inside the elevator car 6 are not required to have elevator car control buttons for input of the desired destination floor.

The wireless communication described herein may also be applied in a modified way to elevator systems having traditional up/down call buttons. In this case, an elevator car request will include a hall call and the corresponding car call input by the passenger after the dispatched elevator car has arrived at the passenger's source floor.

The wireless communication described herein is particularly well suited for elevator systems in which elevator car calls can be made using mobile devices equipped with particular software for communicating with the elevator system and in which input of elevator car calls can be made via user interfaces of the mobile devices.

The elevator hall call panels 7a and the elevator car control buttons 7b may be connected to the elevator controller 10 by means of electrical lines, which are not shown in Fig. 1, in particular by an electric bus, e.g. a field bus such as a CAN bus, or by means of wireless data transmission.

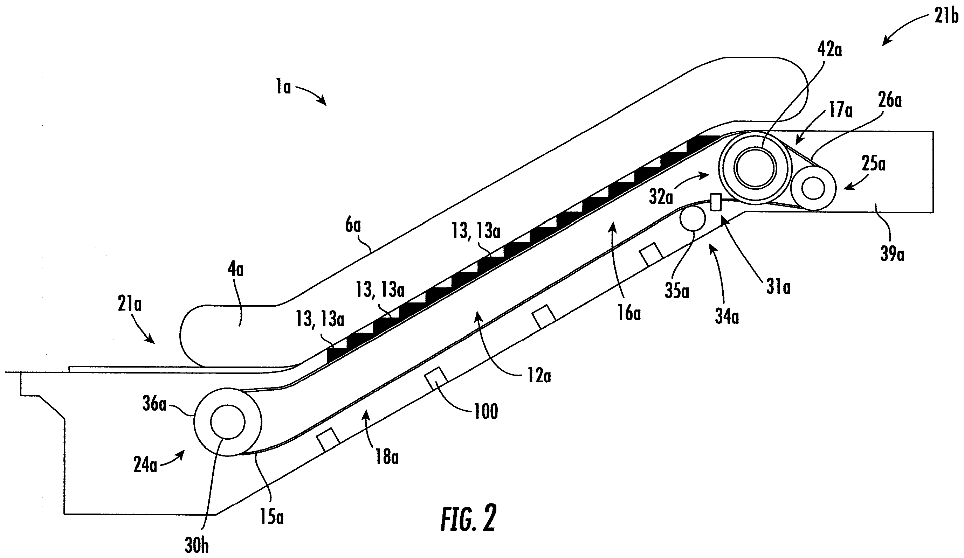

Fig. 2 shows a schematic side view of a people conveyor, in particular an escalator 1a, comprising a plurality of treads 13 (steps 13a) interconnected to form an endless tread band 12a extending in a longitudinal conveyance direction between a lower landing 21a and an upper landing 21b. For clarity, only some of the treads 13, in particular treads 13 in the conveyance portion 16a, are depicted in Fig. 2. Further, not all treads 13 are denoted with reference signs.

In an upper turnaround portion 17a next to the upper landing 21a and in a lower turnaround portion 24a next to the lower landing 20a, the endless tread band 12a passes from a conveyance portion 16a extending between the upper and lower landings 21b, 21a into a return portion 18a, and vice versa.

The upper turnaround portion 17a is a driving portion and comprises a tension member drive system 25a. The tension member drive system 25a comprises a motor driving a drive shaft 42a via a transmission element 26a, particularly a toothed belt, a belt or a chain. The drive shaft 42a supports a drive wheel 32a, e.g. a toothed belt drive sheave, a traction sheave or a sprocket.

The drive shaft 42a drivingly engages an endless tread drive tension member 15a. The endless tread drive tension member 15a may be a belt, particularly a toothed belt, or a chain. The endless tread drive tension member 15a is drivingly coupled to the treads 13 and thereby drives the treads 13 to travel along the endless path of the tread band 12a. The endless tread drive tension member 15a is endless and thus extends along a closed loop. The endless tread drive tension member 15a is in engagement with, and driven by, the drive wheel 32a supported by the drive shaft 42a.

The lower turnaround portion 24a comprises a turnaround element 36a, e.g. an idler wheel or an idler sprocket attached to a turnaround shaft 30h. The turnaround element 36a engages with the endless tread drive tension member 15a to guide the endless tread drive tension member 15a from the conveyance portion 16a to the return portion 18a.

In a tension portion 34a the endless tread drive tension member 15a engages a tension shaft 35a having a tension element, e.g. an idler sprocket or an idler wheel. The tension element is configured to adjust tension of the endless tread drive tension member 15a while traveling along its endless path, such that wear of the endless tread drive tension member 15a is reduced. For example, the tension portion 34a may be positioned in the return portion 18a.

In further embodiments, the tension portion 34a may be located in the upper and/or lower turnaround portions 17a, 24a. In such case, the upper/lower turnaround shaft may also provide the function of the tension shaft.

Alternatively, the turnaround portion 24a next to the lower landing 21a may be the driving portion.

The people conveyor 1a further comprises a brake 31a which is configured for braking movement of the endless tread band 12a. The brake 31a is depicted as a separate component of the tension member drive system 25a in Fig. 2. The brake 31a, however, may be integrated with another component of the tension member drive system 25a. For example, the brake 31a may engage with the drive wheel 32a or the drive shaft 42a.

Balustrades 4a supporting moving handrails 6a extend parallel to the conveyance portion 16a. The balustrades 4a are each supported by a separate truss 39a. Only one of the balustrades 4a, and the trusses 39a are visible in the side view shown in Fig. 2. The trusses 39a are connected to each other by one or more crossbeams 100 forming a connecting structure. The crossbeams 100 may comprise different profiles, for example, a rectangular, a triangular, or a circular profile. The crossbeams 100 are fixed to the trusses 39a by a detachable connection, such as by at least one bolt or screw, or by a fixed connection, such as by at least one weld. The crossbeams 100 are positioned under the endless tread band 12a and the endless tread drive tension member 15a. This allows easy removal of the endless tread drive tension member 15a during maintenance or repair, since the endless tread drive tension member 15a does not have to be opened.

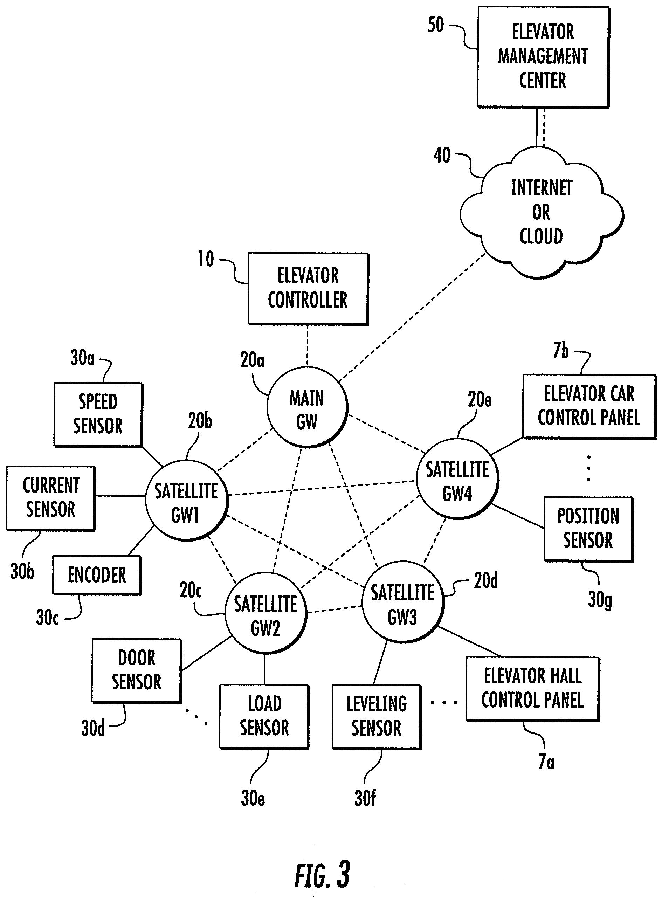

Fig. 3 is a schematic diagram depicting a communication system implemented in an elevator system according to an exemplary embodiment of the invention.

The communication system shown in Fig. 3 comprises a main GW 20a and first to fourth satellite GWs 20b-20e which are wirelessly connected each other via a wireless local area network (WLAN). The main GW 20a is connected to an elevator controller 10 and each of the first to fourth satellite GWs 20b-20e is connected to at least one sensor arranged at a certain place in the elevator system 1 to collect data necessary for operation and management of the elevator system 1. For example, in Fig. 3, the first satellite GW 20b is connected a speed sensor 30a, a current sensor 30b, and an encoder 30c, the second satellite GW 20c is connected to a door sensor 30d and a load sensor 30e, the third satellite GW 20d is connected with a leveling sensor 30f and an elevator hall control panel, and the fourth satellite sensor 20e is connected with an elevator car control panel 7b and a position sensor 30g. The connection between each sensor and each GW may be wireless or wired via, e.g. RS-422, an RS-232 cable, a Modbus cable, a serial discrete cable, a PROFibus cable, or a CAN bus. As described above, the elevator controller 10 is configured to control operation of the elevator system a by, e.g. controlling the drive 5.

It is to be understood that the configuration depicted in Fig. 3 is exemplary. In other words, there is no limitation in the number of sensors which are connected with each of the main GW 20a and the satellited GWs 20b-20d. For example, it may also be possible for one main GW or one satellite GW to be connected with one sensor or one controller. In addition, there may be other types of sensors or controllers arranged somewhere in the elevator system 1. As another example, at least one sensor like a temperature sensor may be connected to the main GW 20.

In Fig. 3, each of the sensors 30a-30g, the elevator controller 10, the elevator hall control panel 7a, and the elevator car control panel 7b collects data according to its intended purpose. For example, the speed sensor 31a measures a speed of an elevator car 6 in the elevator system 1, the current sensor 30b detects a working current of a motor used in the elevator system 1, and the encoder 30c detects a rotation speed of the motor, etc. The data collected by each of the sensors 30a-30g, the elevator controller 10, the elevator hall control panel 7a, and the elevator car control panel 7b is transferred to a corresponding GW, i.e. one of the main GW 20a and the first to fourth GWs 20b-20d which is connected with the sensor transferring the data.

Each of the satellite GWs 20b-20e receiving the data from a corresponding sensor or controller performs a predefined data processing on the received data and transfers the resulting data to the main GW 20a via the WLAN. Alternatively, it may also be possible for the satellite GWs 20b-20e to transfer the data received from the sensors or controllers to the main GW 20a without data processing.

The WLAN is any of a Bluetooth Low Energy (BLE), a Sub-1GHz RF, a Low-Power Wide-Area Network (LPWAN), and a Low-Range Wide-Area-Network (LoRaWAN). The main GW 20a and the satellite GWs 20b-20e may perform edge computing. In particular, instead of transferring all obtained raw data, each of the main GW 20a and the satellite GWs 20b-20e performs the predefined data processing with the raw data and the processed data is transferred to the main GW 20a. For example, in Fig. 3, all speed data detected by the speed sensor 30a does not need to be delivered to the elevator management center 50 via the main GW 20a. Instead, the first satellite GW 20b connected to the speed sensor 30a may be configured to transmit data only when the measured speed exceeds a predetermined threshold. For the edge computing, each of the main GW 20a and the satellite GWs 20b-20e needs to be equipped with a data processor necessary for performing the predefined data processing. From the edge computing, real-time data processing near the source of data, i.e. a sensor, is possible and thereby the entire volume of data to be delivered through the network can be significantly decreased. The main GW 20a is configured to pass the received data to the elevator management center 50 via the Internet or the cloud system 40.

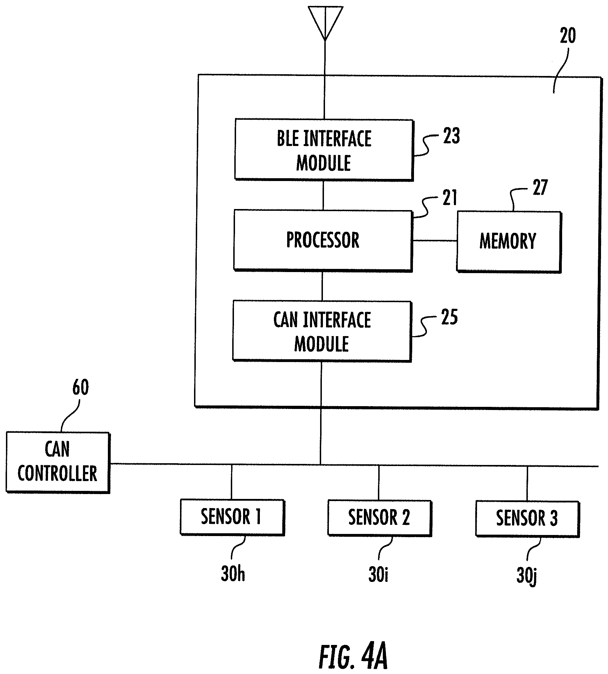

Fig. 4A is a diagram showing an exemplary structure of a satellite GW in accordance with an embodiment of the present invention. Referring to Fig. 4A, the satellite GW 20 comprises a processor 21, a BLE interface module 23, a CAN interface module 25, and a memory 27. The CAN interface module 25 is configured to enable the satellite GW 20 to be connected to three sensors 30h, 30i, 30j, or any desired number of sensors and/or controllers, via a CAN bus of the elevator system 1. In the case of using the RS-422 cable for the connection between the satellite GW 20 and each sensor, the CAN interface module 25 is to be replaced with an RS-422 interface module.

In Fig. 4A, the processor 21 is configured to control overall operations of the satellite GW 20 and to perform a predefined data processing on raw data received from the sensors 30h, 30i, 30j. The BLE interface module 23 is configured to perform a data processing necessary for transmitting the data transferred from the processor 21 through a BLE network based upon which the main GW 20a and the plurality of satellite GWs are interconnected each other. Programs, applications, and data necessary for the data processing in the satellite GW 20 may be stored in the memory 27.

A CAN controller 60 shown in Fig. 4A is configured to control data communications via the CAN bus in the elevator system 1. The CAN controller 60 may be configured to provide the satellite GW 20 with electric power necessary for the operations of the satellite GW 20. The power may be originated from an internal power supply system of the elevator system 1. Alternatively, the satellite GW 20 may have its own battery.

The configuration of the satellite GW 20 as shown in Fig. 4A may be well suited for a preexisting elevator system which has already been equipped with a plurality of sensors and/or controllers. In particular, a plurality of satellite GWs may be installed in a preexisting elevator system to be connected with the sensors and/or controllers via the CAN bus or the RS-422 cable of the elevator system like a plug and play solution, which can reduce time and cost for the installation of a new network system in the preexisting elevator system.

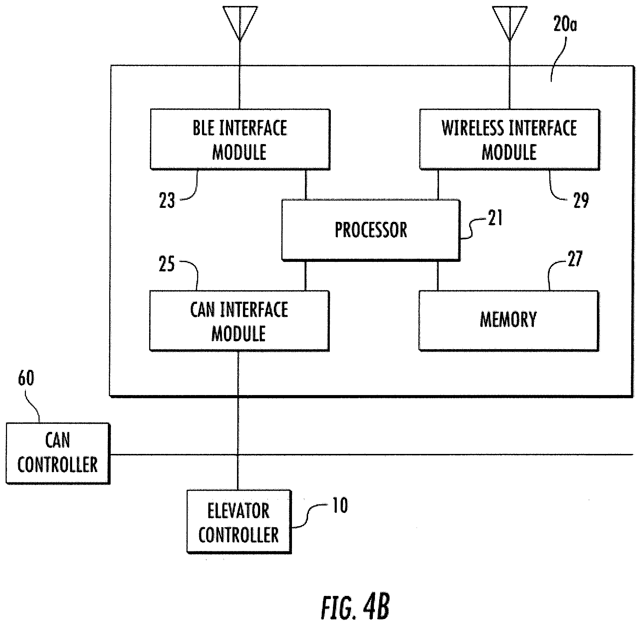

Fig. 4B is a diagram showing an exemplary structure of a main GW in accordance with an embodiment of the present invention.

Compared to the structure of the satellite GW 20 as shown in Fig. 4A, the main GW further comprises a wireless interface module 29 which provides a wireless interface between the main GW 20a and the Internet or the cloud system 40. In particular, the wireless interface module 29 is configured to perform a predefined data processing necessary for transmitting data received from any of satellite GWs 20b-20e or the elevator controller 10 through the Internet or the cloud 40. For example, the wireless interface module 29 may be a wireless network interface controller (WNIC) which performs data processing in accordance with a wireless technical standard such as WiFi (IEEE 802.11), 3GPP WCDMA, 3GPP LTE, or 3GPP LTE-A etc. Alternatively, the wireless interface module 29 may be replaced with a wired communication interface module like a network interface controller (NIC) configured to perform a wired communication between the main GW 20a and the Internet or the cloud 40.

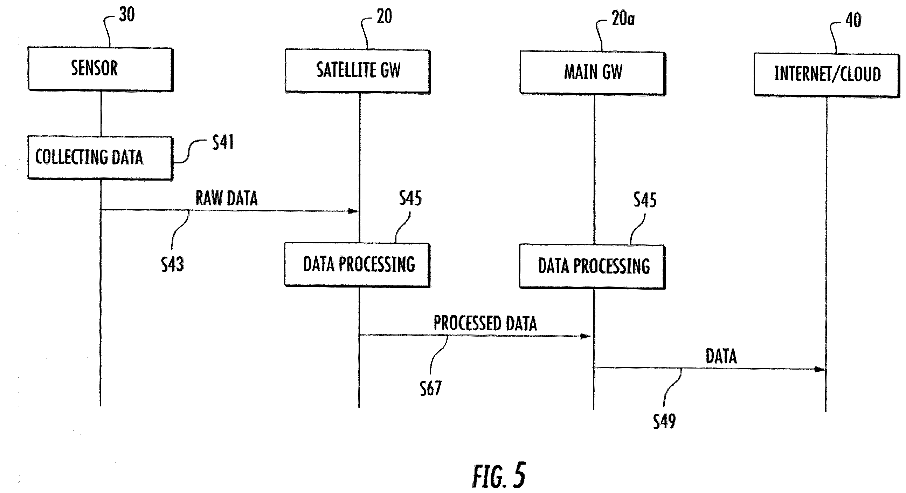

Fig. 5 is a flowchart showing a data flow according to an exemplary embodiment of the invention. In Fig. 5, at S41, each sensor or controller 30 of the elevator system 30 collects data according to its purpose and, at S43, the collected raw data is transferred by the sensor 30 to the satellite GW 20. Thereafter, at S45, upon receiving the raw data, the satellite GW 20 performs a predefined data processing on the raw data and, at S47, the processed data is transferred by the satellite GW 20 to the main GW 20a through the BLE network. At S49, the main GW 20a transfers the received data to the elevator management center 50 via the Internet or the cloud system. As described above, the satellite GWs 20b-20e may transfer the data received from the sensors or controllers to the main GW 20a without data processing.

As another embodiment, in the case of a new building, for example, the structure of the satellite GW 20 as shown in Fig. 4A can be embedded in each sensor or controller of an elevator system. In other words, each sensor or controller of a new elevator system can be equipped with a processor 21, a BLE interface module 23, and a memory 27 and thereby establishing a BLE network between all sensors and/or controllers in the elevator system would be possible.

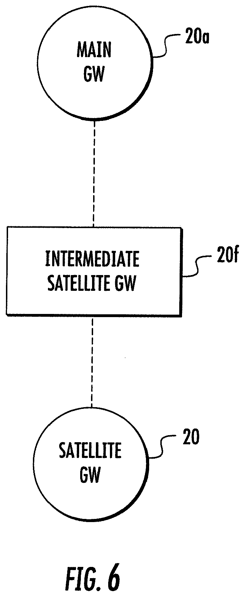

The embodiments described above are based on an elevator system. Yet, it is to be understood that the concept of the present invention is able to be applied to another passenger conveyor system like an escalator system, a cable car system, and a ski lift system etc. In a large scale passenger conveyor system such as an elevator system in a skyscraper or a cable car system, an intermediate satellite GW 20f may be used as depicted in Fig. 6. In other words, the intermediate satellite GW 20f is configured to interconnect the main GW 20a and the satellite GW 20. A plurality of intermediate satellite GWs may be interconnected serially in between the satellite GW and the main GW.

Moreover, it should also be appreciated that the embodiments of the present invention can be extended to other systems used in different technical fields, e.g. a factory monitoring system, a heating, ventilation and air conditioning (HVAC) system, a building security system or a building management system, where a plurality of sensors and/or controllers are arranged.

According to the embodiments of the present invention, real-time data processing near sensors or controllers of a system having a plurality of sensors and/or controllers is possible and thereby the entire volume of data to be delivered throughout a network of the system can be significantly decreased. In addition, a new wireless network can be easily implemented in a system having an existing wired network consisting of sensors and/or controllers with significantly reduced installation time and cost.

While the invention has been described with reference to exemplary embodiments, it will be understood by those skilled in the art that various changes may be made and equivalents may be substituted for elements thereof without departing from the scope of the invention. In addition, many modifications may be made to adopt a particular situation or material to the teachings of the invention without departing from the essential scope thereof. Therefore, it is intended that the invention is not limited to the particular embodiments disclosed, but that the invention includes all embodiments falling within the scope of the claims.

### References

- 1: elevator system
- 1a: escalator
- 3: tension member
- 4: hoistway
- 4a: balustrade
- 5: drive
- 6: elevator car
- 6a: moving handrail
- 7a: hall call panel
- 7b: car control panel
- 8: landing
- 9: landing door frame
- 10: elevator control
- 12a: endless tread band
- 13: treads
- 13a: steps
- 15a: endless tread drive tension member
- 16a: conveyance portion
- 17a: driving portion
- 18a: return portion
- 20a: main GW
- 20b-20e: satellite GW
- 21: processor
- 21a, 21b: landing portions
- 23: BLE interface module
- 24a: turnaround portion
- 25: CAN interface module
- 25a: tension member drive system
- 26a: transmission element
- 27: memory
- 29: wireless interface module
- 30a-30j: sensors
- 30h: turnaround shaft
- 31a: brake
- 32a: drive wheel
- 34a: tension portion
- 35a: tension shaft
- 36a: turnaround element
- 39a: truss
- 40: Internet or cloud
- 50: elevator management center
- 60: CAN controller
- 100: connecting structure

## Claims

1. A communication system to be used in a passenger conveyor system having a plurality of sensors and/or controllers (30a-30g, 7a, 7b), the communication system comprising:
a main gateway, GW, (20a) connected to a first controller (10) of the system, the main GW (20a) connectable to a management center (50) of the system via the Internet or a cloud system (40); and
at least one satellite GW (20b-20e) connected to at least one of the plurality of sensors and/or controllers (30a-30g, 7a, 7b) of the system, the at least one satellite GW (20b-20e) connected to the main GW (20a) via a wireless local area network, WLAN,
**characterized in that**
the at least one satellite GW (20b-20e) comprises a plurality of satellite GWs (20b-20e) which are wirelessly connected each other via the WLAN, each of the plurality of satellite GWs (20b-20e) is connected with at least one of the plurality of sensors and/or controllers (30a-30g, 7a, 7b) via a wireless or wired connection, and
each of the plurality of satellite GWs (20b-20e) is configured to perform a predefined data processing on data received from the at least one of the plurality of sensors and/or controllers (30a-30g, 7a, 7b) and to transfer the resulting data to the main GW via the WLAN.

2. The communication system according to claim 1, further comprising an intermediate satellite GW (20f) configured to wirelessly interconnect the main GW (20a) and any of the at least one satellite GW (20b-20e).

3. The communication system according to any of preceding claims, wherein the WLAN is any of a Bluetooth Low Energy, BLE, network or a Sub-1GHz RF network.

4. The communication system according to any of preceding claims, wherein the connection between the main GW (20a) and the first controller (10), and/or the connection between the satellite GW (20b-20e) and the at least one of the plurality of sensors and/or controllers (30a-30g, 7a, 7b) is a wired connection using an RS-422 cable, an RS-232 cable, a Modbus cable, a serial discrete cable, a PROFibus cable, or a CAN bus.

5. The communication system according to any of preceding claims, wherein the main GW (20a) or each of the at least one satellite GW (20b-20e) comprises:
a processor (21) configured to perform the predefined data processing with data received from the first controller (10) or each of the plurality of sensors and/or controllers (30a-30g, 7a, 7b);
a first interface module (25) configured to perform wired communications with the first controller (10) or each of the plurality of sensors and/or controllers (30a-30g, 7a, 7b); and
a second interface module configured to perform wireless communications with each of the plurality of sensors and/or controllers (30a-30g, 7a, 7b) or the main GW (20a).

6. The communication system according to claim 4 or 5, wherein power for the main GW (20a) and satellite GW (20b-20e) is provided by an internal power source of the system via the RS 422 cable, the RS-232 cable, the Modbus cable, the serial discrete cable, the PROFibus cable, or the CAN bus.

7. A method of performing communication in the communication system according to any of claims 1-6, the method comprising:
receiving (S43), by a satellite gateway, GW, (20a) among the plurality of satellite GWs (20b-20e), data from at least one of the plurality of sensors and/or controllers (30a-30g, 7a, 7b) of the system;
**characterised by**
performing (S45), by the satellite GW (20b-20e), the predefined data processing on the received data;
transferring (S47), by the satellite GW (20b-20e), the processed data to the main GW (20a); and
transferring (S49), by the main GW (20a), the received data to the management center (50) of the system via the Internet or the cloud system (40).

## Patentansprüche

1. Kommunikationssystem zur Verwendung in einem Personenbeförderungssystem, das eine Vielzahl von Sensoren und/oder Steuerungen (30a-30g, 7a, 7b) aufweist, wobei das Kommunikationssystem Folgendes umfasst:
ein Haupt-Gateway, GW, (20a), das mit einer ersten Steuerung (10) des Systems verbunden ist, wobei das Haupt-GW (20a) mit einem Verwaltungszentrum (50) des Systems über das Internet oder ein Cloud-System (40) verbunden werden kann; und
mindestens ein Satelliten-GW (20b-20e), das mit dem mindestens einen aus der Vielzahl von Sensoren und/oder Steuerungen (30a-30g, 7a, 7b) des Systems verbunden ist, wobei das mindestens eine Satelliten-GW (20b-20e) mit dem Haupt-GW (20a) über ein lokales Funknetz (wireless local area network), WLAN, verbunden ist,
**dadurch gekennzeichnet, dass**
das mindestens eine Satelliten-GW (20b-20e) eine Vielzahl von Satelliten-GWs (20b-20e) umfasst, die miteinander drahtlos über das WLAN verbunden sind,,
wobei jedes aus der Vielzahl von Satelliten-GWs (20b-20e) mit mindestens einem aus der Vielzahl von Sensoren und/oder Steuerungen (30a-30g, 7a, 7b) über eine drahtlose oder verdrahtete Verbindung verbunden ist, und
jedes aus der Vielzahl von Satelliten-GWs (20b-20e) so konfiguriert ist, dass es eine vordefinierte Datenverarbeitung an Daten durchführt, die von dem mindestens einen aus der Vielzahl von Sensoren und/oder Steuerungen (30a-30g, 7a, 7b) empfangen werden, und die resultierenden Daten an das Haupt-GW über das WLAN überträgt.

2. Kommunikationssystem nach Anspruch 1, ferner ein Zwischen-Satelliten-GW (20f) umfassend, das so konfiguriert ist, dass es das Haupt-GW (20a) und beliebige aus dem mindestens einen Satelliten-GW (20b-20e) verbindet.

3. Kommunikationssystem nach einem der vorstehenden Ansprüche, wobei das WLAN eines aus einem Bluetooth-Low-Energy(BLE)-Netzwerk oder einem Sub-1GHz-RF-Netzwerk ist.

4. Kommunikationssystem nach einem der vorstehenden Ansprüche, wobei die Verbindung zwischen dem Haupt-GW (20a) und der ersten Steuerung (10), und/oder die Verbindung zwischen dem Satelliten-GW (20b―20e) und dem mindestens einen aus der Vielzahl von Sensoren und/oder Steuerungen (30a-30g, 7a, 7b) eine verdrahtete Verbindung ist, die ein RS―422-Kabel, ein RS-232-Kabel, ein Modbus-Kabel, ein einzelnes serielles Kabel, ein PROFibus-Kabel oder einen CAN-Bus verwendet.

5. Kommunikationssystem nach einem der vorstehenden Ansprüche, wobei das Haupt-GW (20a) oder jedes des mindestens einen Satelliten-GW (20b-20e) Folgendes umfasst:
einen Prozessor (21), der so konfiguriert ist, dass er die vordefinierte Datenverarbeitung mit den Daten, die von der ersten Steuerung (10) oder jedem aus der Vielzahl von Sensoren und/oder Steuerungen (30a-30g, 7a, 7b) empfangen werden, durchführt;
ein erstes Schnittstellenmodul (25), das so konfiguriert ist, dass es eine verdrahtete Kommunikation mit der ersten Steuerung (10) oder jedem aus der Vielzahl von Sensoren und/oder Steuerungen (30a-30g, 7a, 7b) durchführt; und
ein zweites Schnittstellenmodul, das so konfiguriert ist, dass es eine drahtlose Kommunikation mit jedem aus der Vielzahl von Sensoren und/oder Steuerungen oder dem Haupt-GW (20a) durchführt.

6. Kommunikationssystem nach Anspruch 4 oder 5, wobei die Energie für das Haupt-GW (20a) und das Satelliten-GW (20b-20e) von einer internen Energiequelle des Systems über das RS―422-Kabel, das RS-232-Kabel, das Modbus-Kabel, das einzelne serielle Kabel, das PROFibus-Kabel oder den CAN-Bus bereitgestellt wird.

7. Verfahren zum Durchführen einer Kommunikation in dem Kommunikationssystem nach einem der Ansprüche 1-6, wobei das Verfahren Folgendes umfasst:
Empfangen (S43), durch ein Satelliten-Gateway, GW, (20a) aus der Vielzahl von Satelliten-GWs (20b―20e), Daten von mindestens einem aus der Vielzahl von Sensoren und/oder Steuerungen (30a-30g, 7a, 7b) des Systems;
**gekennzeichnet durch**
Durchführen (S45), durch das Satelliten-GW (20b-20e), des vordefinierten Datenverarbeitens an den empfangenen Daten;
Übertragen (S47), durch das Satelliten-GW (20b-20e), der verarbeiteten Daten an das Haupt-GW (20a); und
Übertragen (S49), durch das Haupt-GW (20a), der empfangenen Daten an das Verwaltungszentrum (50) des Systems über das Internet oder das Cloud-system (40).

## Revendications

1. Système de communication destiné à être utilisé dans un système de transport de passagers ayant une pluralité de capteurs et/ou de dispositifs de commande (30a-30g, 7a, 7b), le système de communication comprenant :
une passerelle principale, GW, (20a) connectée à un premier dispositif de commande (10) du système, la GW principale (20a) pouvant être connectée à un centre de gestion (50) du système via Internet ou un système en nuage (40) ; et
au moins une GW satellite (20b-20e) connectée à au moins l'un de la pluralité de capteurs et/ou de dispositifs de commande (30a-30g, 7a, 7b) du système, l'au moins une GW satellite (20b-20e) étant connectée à la GW principale (20a) via un réseau local sans fil, WLAN,
**caractérisé en ce que**
l'au moins une GW satellite (20b-20e) comprend une pluralité de GW satellites (20b-20e) qui sont connectées sans fil les unes aux autres via le WLAN,
chacune de la pluralité de GW satellites (20b-20e) est connectée à au moins l'un de la pluralité de capteurs et/ou de dispositifs de commande (30a-30g, 7a, 7b) via une connexion sans fil ou filaire, et
chacune de la pluralité de GW satellites (20b-20e) est configurée pour effectuer un traitement de données prédéfini sur des données reçues depuis l'au moins un de la pluralité de capteurs et/ou de dispositifs de commande (30a-30g, 7a, 7b) et pour transférer les données résultantes à la GW principale via le WLAN.

2. Système de communication selon la revendication 1, comprenant en outre une GW satellite intermédiaire (20f) configurée pour interconnecter sans fil la GW principale (20a) et l'une quelconque de l'au moins une GW satellite (20b-20e).

3. Système de communication selon l'une quelconque des revendications précédentes, dans lequel le WLAN est l'un quelconque d'un réseau Bluetooth Low Energy, BLE, ou d'un réseau RF inférieur à 1 GHz.

4. Système de communication selon l'une quelconque des revendications précédentes, dans lequel la connexion entre la GW principale (20a) et le premier dispositif de commande (10), et/ou la connexion entre la GW satellite (20b-20e) et l'au moins un de la pluralité de capteurs et/ou de dispositifs de commande (30a-30g, 7a, 7b) est une connexion filaire utilisant un câble RS-422, un câble RS-232, un câble Modbus, un câble série distinct, un câble PROFibus ou un bus CAN.

5. Système de communication selon l'une quelconque des revendications précédentes, dans lequel la GW principale (20a) ou chacune de l'au moins une GW satellite (20b-20e) comprend :
un processeur (21) configuré pour effectuer le traitement de données prédéfini avec des données reçues depuis le premier dispositif de commande (10) ou depuis chacun de la pluralité de capteurs et/ou de dispositifs de commande (30a-30g, 7a, 7b) ;
un premier module d'interface (25) configuré pour effectuer des communications filaires avec le premier dispositif de commande (10) ou chacun de la pluralité de capteurs et/ou de dispositifs de commande (30a-30g, 7a, 7b) ; et
un second module d'interface configuré pour effectuer des communications sans fil avec chacun de la pluralité de capteurs et/ou de dispositifs de commande (30a-30g, 7a, 7b) ou la GW principale (20a).

6. Système de communication selon la revendication 4 ou 5, dans lequel l'alimentation pour la GW principale (20a) et la GW satellite (20b-20e) est fournie par une source d'alimentation interne du système via le câble RS 422, le câble RS-232, le câble Modbus, le câble série distinct, le câble PROFibus ou le bus CAN.

7. Procédé de mise en œuvre de communication dans le système de communication selon l'une quelconque des revendications 1 à 6, le procédé comprenant :
la réception (S43), par une passerelle satellite, GW, (20a) parmi la pluralité de GW satellites (20b-20e), de données depuis au moins l'un de la pluralité de capteurs et/ou de dispositifs de commande (30a-30g, 7a, 7b) du système ;
**caractérisé par**
la mise en œuvre (S45), par la GW satellite (20b-20e), du traitement de données prédéfini sur les données reçues ;
le transfert (S47), par la GW satellite (20b-20e), des données traitées à la GW principale (20a) ; et
le transfert (S49), par la GW principale (20a), des données reçues au centre de gestion (50) du système via Internet ou le système en nuage (40).
